# EUROPÄISCHE PATENTSCHRIFT

(11) **EP 2 897 763 B1**
(45) Veröffentlichungstag und Bekanntmachung des Hinweises auf die Patenterteilung: **16.11.2016**
(21) Anmeldenummer: 13765951.2
(22) Anmeldetag: 18.09.2013
(51) Int. Cl.: B23Q 1/00

(54) **SPANNSYSTEM MIT EINEM ROTATIONSANTRIEB**
CLAMPING SYSTEM WITH A ROTATION DRIVE
SYSTÈME DE SERRAGE À ENTRAÎNEMENT ROTATIF

(30) Priorität: 19.09.2012 DE 102012018528
(43) Veröffentlichungstag der Anmeldung: 29.07.2015
(73) Patentinhaber: Stark Spannsysteme GmbH, 6840 Götzis (AT)
(72) Erfinder: EGGER, Remo, A-6941 Langenegg (AT)
(74) Vertreter: v. Bezold & Partner Patentanwälte - PartG mbB
(86) Internationale Anmeldenummer: PCT/EP2013/002815
(87) Internationale Veröffentlichungsnummer: WO 2014/044390

(56) Entgegenhaltungen:
- DE-A1-102007 031 463
- DE-A1-102010 046 377

## Beschreibung

Die Erfindung betrifft ein Nullpunktspannsystem.

Ein derartiges Nullpunktspannsystem ist beispielsweise aus DE 10 2007 031 463 A1 bekannt und ermöglicht das Einspannen eines Einzugsnippels in eine Aufnahmebohrung des Nullpunktspannsystems, wobei der Einzugsnippel beispielsweise an einem Werkstück oder einer Werkstückpalette befestigt ist. Das Einspannen des Einzugsnippels in der Aufnahmebohrung des Nullpunktspannsystems erfolgt hierbei über Spannkugeln durch ein ringförmiges Spannelement, das die Aufnahmebohrung ringförmig umgibt und entlang der Einzugsachse der Aufnahmebohrung verschiebbar ist. Bei dem herkömmlichen Nullpunktspannsystem ist ein hydraulischer Antrieb für das Spannelement vorgesehen, wodurch relativ hohe Spannkräfte realisierbar sind.

Nachteilig an diesem bekannten Nullpunktspannsystem mit einem hydraulischen Antrieb ist jedoch die Tatsache, dass Hydraulikaggregate erforderlich sind und die Hydraulikschläuche gewartet werden müssen.

Weitere Spannsysteme sind aus der DE 10 2010 046 377 A1, der DE 103 17 342 A1, der DE 102 16 003 A1, der DE 101 23 270 A1 und der US 3 170 348 A bekannt.

Der Erfindung liegt deshalb die Aufgabe zugrunde, ein entsprechend verbessertes Nullpunktspannsystem zu schaffen. Diese Aufgabe wird durch ein erfindungsgemäßes Spannsystem gemäß dem Hauptanspruch gelöst.

Die Erfindung umfasst die allgemeine technische Lehre, anstelle eines herkömmlichen hydraulischen Antriebs für das Spannelement einen Rotationsantrieb (z.B. Elektromotor) einzusetzen, der das Spannelement mechanisch antreibt.

Das erfindungsgemäße Spannsystem weist zunächst in Übereinstimmung mit herkömmlichen Spannsystemen eine Aufnahmebohrung auf, um einen Einzugsnippel entlang einer Einzugsachse aufzunehmen, wobei der Einzugsnippel an einem zu spannenden Gegenstand (z.B. Werkstück, Werkstückpalette) angebracht werden kann.

Weiterhin weist das erfindungsgemäße Spannsystem in Übereinstimmung mit dem Stand der Technik ein Spannelement auf, um den Einzugsnippel in der Aufnahmebohrung festzuspannen. Hierbei ist zu erwähnen, dass das Spannelement entlang der Einzugsachse verschiebbar ist, wodurch sich das erfindungsgemäße Spannsystem von anderen Typen von Spannsystemen unterscheidet, bei denen das Spannelement quer zur Einzugsachse verschiebbar ist.

Darüber hinaus weist das erfindungsgemäße Spannsystem in Übereinstimmung mit dem Stand der Technik einen Antrieb auf, um das Spannelement entlang der Einzugsachse zu verschieben.

Das erfindungsgemäße Spannsystem zeichnet sich gegenüber dem Stand der Technik dadurch aus, dass der Antrieb für das Spannelement ein Rotationsantrieb ist, der zunächst eine Drehbewegung erzeugt, wohingegen die bekannten hydraulischen Antriebe keine derartige Drehbewegung erzeugen, sondern direkt die Linearbewegung des Spannelements bewirken.

Darüber hinaus weist das erfindungsgemäße Spannsystem ein Getriebe auf, das die Drehbewegung des Rotationsantriebs in eine entsprechende Linearbewegung des Spannelements entlang der Einzugsachse umwandelt.

Gemäß der Erfindung ist das Getriebe als zweistufiges Getriebe ausgebildet, umfassend ein erstes Getriebe, um eine Drehbewegung des Rotationsantriebs in eine Linearbewegung des Spannelements entlang der Einzugsachse umzuwandeln, und ein zweites Getriebe, das zwischen dem Rotationsantrieb und dem ersten Getriebe angeordnet ist, wobei das zweite Getriebe mit dem verschiebbaren Spannelement mechanisch verbunden ist und sich zusammen mit dem Spannelement axial entlang der Einzugsachse bewegt. Weiter vorzugsweise ist das zweite Getriebe als Planetengetriebe ausgebildet, jedoch können auch andere Getriebearten verwendet werden.

In einem bevorzugten Ausführungsbeispiel der Erfindung weist das Getriebe ein Schraubgetriebe auf, um die Drehbewegung des Rotationsantriebs in die Linearbewegung des Spannelements entlang der Einzugsachse umzuwandeln. Derartige Schraubgetriebe sind an sich aus dem Stand der Technik bekannt und bestehen in der Regel aus einem gewindetragenden Bauteil und einem darauf verschiebbaren, aber nicht drehbar gelagerten Gegengewinde, wobei eine Drehbewegung der beiden Teile relativ zueinander eine entsprechende Verschiebebewegung erzeugt.

Vorzugsweise ist das Schraubgetriebe selbsthemmend, so dass eine Zugbelastung oder eine Druckbelastung des Schraubgetriebes entlang der Einzugsachse nicht zu einer Drehbewegung des Schraubgetriebes führt. Dies bietet den Vorteil, dass der Rotationsantrieb nach dem Festspannen des Einzugsnippels in der Aufnahmebohrung abgeschaltet werden kann, da die Selbsthemmung des Schraubgetriebes dann ein Lösen der Spannung verhindert.

Weiterhin ist zu erwähnen, dass der Rotationsantrieb vorzugsweise ein maximales Spannmoment von mindestens 20 Nm, 30 Nm, 40 Nm oder sogar 60 Nm auf das Schraubgetriebe ausübt, um hinsichtlich der Spannkraft keine Einbußen gegenüber herkömmlichen hydraulischen Antrieben zu zeigen. Ein derartiges Spannmoment lässt sich beispielsweise durch den Einsatz eines Planetengetriebes zwischen dem Rotationsantrieb und dem Schraubgetriebe erreichen, was noch detailliert beschrieben wird.

In dem bevorzugten Ausführungsbeispiel der Erfindung weist das Schraubgetriebe ein entlang der Einzugsachse axial feststehendes erstes Gewindebauteil (z.B. ein Gehäusebauteil) auf. Weiterhin umfasst das Schraubgetriebe hierbei vorzugsweise ein entlang der Einzugsachse axial verschiebbares zweites Gewindebauteil, das mit dem Spannelement verbunden ist, wobei eines der beiden Gewindebauteile um die Einzugsachse drehbar ist und von dem Rotationsantrieb angetrieben wird. Die beiden Gewindebauteile sind hierbei durch eine Schraubgewindeverbindung mit einem schraubenförmigen Außengewinde und einem schraubenförmigen Innengewinde verbunden, so dass eine relative Drehbewegung der beiden Gewindebauteile zu einer Linearbewegung des verschiebbaren zweiten Gewindebauteils und damit auch des Spannelements entlang der Einzugsachse führt.

In einer Variante der Erfindung ist das entlang der Einzugsachse verschiebbare zweite Gewindebauteil um die Einzugsachse drehbar, während das entlang der Einzugsachse axial feststehende erste Gewindebauteil nicht drehbar ist. In einer anderen Variante der Erfindung ist dagegen das entlang der Einzugsachse axial verschiebbare zweite Gewindebauteil nicht drehbar, während das axial feststehende erste Gewindebauteil drehbar ist.

Eine Möglichkeit der erfindungsgemäßen Realisierung sieht vor, dass das entlang der Einzugsachse feststehende erste Gewindebauteil die Innenverzahnung trägt, während das entlang der Einzugsachse verschiebbare zweite Gewindebauteil die Außenverzahnung aufweist. Eine andere Möglichkeit besteht dagegen darin, dass das entlang der Einzugsachse feststehende erste Gewindebauteil die Außenverzahnung aufweist, während das entlang der Einzugsachse verschiebbare zweite Gewindebauteil die Innenverzahnung aufweist.

Es wurde bereits vorstehend kurz erwähnt, dass das Getriebe vorzugsweise ein Planetengetriebe aufweist, das zwischen dem Rotationsantrieb und dem Schraubgetriebe angeordnet ist, wobei das Planetengetriebe die Drehbewegung des Rotationsantriebs mit einer Übersetzung in die Drehbewegung des Schraubgetriebes umsetzt. Das Planetengetriebe weist vorzugsweise ein Übersetzungsverhältnis von mindestens 1:20, 1:40 oder 1:60 auf, um die gewünschte hohe Spannkraft erreichen zu können.

In dem bevorzugten Ausführungsbeispiel der Erfindung weist das Planetengetriebe zwei hintereinander geschaltete Planetenstufen auf. Die Erfindung ist jedoch auch mit nur einer einzigen Planetenstufe oder einer größeren Anzahl von Planetenstufen realisierbar.

Darüber hinaus ist zu erwähnen, dass das Spannsystem ein Gehäuse aufweist, das vorzugsweise auch das Planetengetriebe einhaust.

Ferner ist das Planetengetriebe vorzugsweise mit dem Spannelement mechanisch verbunden und bewegt sich zusammen mit dem Spannelement axial entlang der Einzugsachse. Das Planetengetriebe ist also in dem Gehäuse vorzugsweise axial schwimmend gelagert, um eine axiale Bewegung des Planetengetriebes entlang der Einzugsachse zu ermöglichen.

In dem bevorzugten Ausführungsbeispiel der Erfindung weist die Abtriebswelle des Rotationsantriebs eine Stirnradverzahnung mit einer bestimmten axialen Verzahnungslänge auf, während das Planetengetriebe mit einem bestimmten axialen Spiel entlang der Einzugsachse verschiebbar ist. Hierbei ist es wichtig, dass die Abtriebswelle des Rotationsantriebs unabhängig von der axialen Stellung des Planetengetriebes immer im Eingriff mit dem Planetengetriebe steht. Die Verzahnungslänge der Abtriebswelle ist deshalb vorzugsweise größer als das axiale Spiel des Planetengetriebes in dem Gehäuse des Spannsystems, so dass die Abtriebswelle des Rotationsantriebs in jeder axialen Stellung des entlang der Einzugsachse verschiebbaren Planetengetriebes mit der Eingangsverzahnung des Planetengetriebes im Eingriff steht.

Ferner ist zu erwähnen, dass das Spannelement vorzugsweise bezüglich der Einzugsachse schwimmend gelagert ist, insbesondere in dem vorstehend erwähnten verschiebbaren zweiten Gewindebauteil. Hierbei ist die axiale Linearbewegung des Spannelements entlang der Einzugsachse vorzugsweise sowohl in einer Einzugsrichtung als auch in einer entgegengesetzten Aushubrichtung begrenzt. Besonders vorteilhaft ist, wenn das Spannelement in einer Ebene senkrecht zur Einzugsachse schwimmend in dem vorstehend erwähnten verschiebbaren zweiten Gewindebauteil gelagert ist. Die schwimmende Lagerung des Spannelements derart, dass es quer zur Einzugsachse beweglich ist, hat den Vorteil, dass das Spannelement den Einzugsnippel auch dann zuverlässig greifen und herunterziehen kann, wenn dieser etwas von der Einzugsachse bzw. der Mitte versetzt einfährt. Damit kann sich das Spannelement und damit die gesamte Einzugsmechanik an eine verschobene Stellung des Einzugsnippels anpassen.

Bei dem Rotationsantrieb handelt es sich vorzugsweise um einen Elektromotor, so dass sich ein hydraulikfreies und/oder pneumatikfreies Spannsystem realisieren lässt. Das erfindungsgemäße Prinzip ist jedoch gleichermaßen mit einem hydraulischen oder pneumatischen Rotationsantrieb realisierbar, so dass die Erfindung nicht auf einen Elektromotor als Antriebsmotor beschränkt ist.

Ferner ist zu erwähnen, dass der Rotationsantrieb vorzugsweise eine drehbare Abtriebswelle aufweist, die mit der Einzugsachse der Aufnahmebohrung koaxial fluchtet.

In Übereinstimmung mit dem Stand der Technik weist auch das erfindungsgemäße Spannsystem vorzugsweise einen Kugelkäfig auf, der die Aufnahmebohrung ringförmig umgibt, wobei der Kugelkäfig mehrere Spannkugeln radial verschiebbar führt. In einer radial innen liegenden Stellung dienen die Spannkugeln dann zum Arretieren bzw. Spannen des Einzugsnippels in der Aufnahmebohrung. In einer radial außen liegenden Stellung geben die Spannkugeln dagegen die Aufnahmebohrung zum Einführen oder Herausziehen des Einzugsnippels frei. Hierbei umgibt das Spannelement den Kugelkäfig vorzugsweise ringförmig und weist in seiner inneren Mantelfläche eine Ringnut auf, um den Spannkugeln ein radiales Ausweichen zu ermöglichen. In einer Freigabestellung des Spannelements können die Spannkugeln hierbei radial so weit nach außen in die Ringnut in dem Spannelement ausweichen, dass der Einzugsnippel in die Aufnahmebohrung eingeführt oder aus der Aufnahmebohrung herausgezogen werden kann. In einer Spannstellung werden die Spannkugeln dagegen von der inneren Mantelfläche des Spannelements radial nach innen gedrückt, um den Einzugsnippel zu arretieren bzw. zu spannen.

Vorzugsweise ist hierbei eine Feder vorgesehen, die den entlang der Einzugsachse verschiebbaren Kugelkäfig mit den Spannkugeln in Richtung der Mündungsöffnung der Aufnahmebohrung drückt. Dies ermöglicht eine Zwischenstellung des Spannelements, in der der Einzugsnippel zwar in die Aufnahmebohrung eingeführt werden kann, wohingegen ein Herausziehen des Einzugsnippels aus der Aufnahmebohrung in der Zwischenstellung des Spannelements nicht möglich ist, wie noch detailliert beschrieben wird.

Das Spannelement ist also vorzugsweise zwischen einer Freigabestellung, einer Einzugsstellung und einer Zwischenstellung verschiebbar. In der Freigabestellung des Spannelements kann der Einzugsnippel in die Aufnahmebohrung eingeführt und aus der Aufnahmebohrung herausgezogen werden. In der Einzugsstellung des Spannelements wird der Einzugsnippel dagegen in der Aufnahmebohrung arretiert und entlang der Einzugsachse gespannt. In der Einzugsstellung des Spannelements ist es also nicht möglich, den Einzugsnippel wieder aus der Aufnahmebohrung herauszuziehen. In der Zwischenstellung des Spannelementes kann der Einzugsnippel zwar in die Aufnahmebohrung eingeführt, aber nicht mehr aus der Aufnahmebohrung herausgezogen werden.

Dies wird dadurch ermöglicht, dass das ringförmige Spannelement in seiner inneren Mantelfläche eine obere Ringnut und eine untere Ringnut aufweist, die ineinander übergehen, wobei die obere Ringnut eine kleinere Nuttiefe aufweist als die untere Ringnut. In der Zwischenstellung des Spannelements werden die Spannkugeln von der oberen Ringnut mit der kleineren Nuttiefe aufgenommen. Beim Einführen des Einzugsnippels in die Aufnahmebohrung drückt der Einzugsnippel dann den Kugelkäfig mit den darin befindlichen Spannkugeln entgegen der Kraft der vorstehend erwähnten Feder nach unten, bis die Spannkugeln in die tiefere untere Ringnut ausweichen können, was das Einführen des Einzugsnippels ermöglicht. Anschließend drückt die Feder den Kugelkäfig wieder so weit nach oben, bis die Spannkugeln wieder in der oberen Ringnut mit der kleineren Nuttiefe ruhen. Der Einzugsnippel kann dann nicht wieder aus der Aufnahmebohrung herausgezogen werden, da die in der oberen Ringnut befindlichen Spannkugeln dies verhindern.

Ferner ist zu erwähnen, dass das erfindungsgemäße Spannsystem vorzugsweise eine Steuereinheit aufweist, welche die Drehbewegung des Rotationsantriebs erfasst und aus der erfassten Drehbewegung die Linearbewegung des Spannelements ermittelt. Die Steuereinheit kann die Linearbewegung des Spannelements vorzugsweise stufenlos steuern und beliebige Zwischenstellungen des Spannelements anfahren.

In einer Variante der Erfindung weist die Steuereinheit eine Regelung mit einer Rückkopplung auf, wobei die Regelung als Soll-Wert die gewünschte axiale Stellung des Spannelements entlang der Einzugsachse erhält und als Regelgröße die Drehstellung des Rotationsantriebs einstellt und erfasst.

In einer anderen Variante der Erfindung weist die Steuereinheit dagegen eine Steuerung auf, die als Soll-Wert die gewünschte axiale Stellung des Spannelements entlang der Einzugsachse erhält und die Drehstellung des Rotationsantriebs rückkopplungsfrei entsprechend dem vorgegebenen Soll-Wert einstellt.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht durch ein erfindungsgemäßes Nullpunktspannsystem in der Freigabestellung, in der der Einzugsnippel eingeführt und herausgezogen werden kann,
- Figur 2: eine Querschnittsansicht des Nullpunktspannsystems aus Figur 1 in einer Einzugsstellung, in der der Einzugsnippel in der Aufnahmebohrung des Nullpunktspannsystems arretiert und gespannt ist,
- Figur 3: eine Querschnittsansicht des Nullpunktspannsystems aus den Figuren 1 und 2 in einer Zwischenstellung, in der der Einzugsnippel zwar in die Aufnahmebohrung eingeführt, aber nicht wieder aus der Aufnahmebohrung herausgezogen werden kann,
- Figur 4: eine Explosionsdarstellung des Nullpunktspannsystems aus den Figuren 1-3,
- Figur 5A: eine vergrößerte Detailansicht aus Figur 1,
- Figur 5B: eine andere vergrößerte Detailansicht aus Figur 1,
- Figur 6: eine Querschnittsansicht des ringförmigen Spannelements des Nullpunktspannsystems gemäß den Figuren 1-5B,
- Figur 7: eine schematische Darstellung des erfindungsgemäßen Nullpunktspannsystems mit einer Regelung, sowie
- Figur 8: eine schematische Darstellung einer Abwandlung des erfindungsgemäßen Spannsystems mit einer rückkopplungsfreien Steuerung.

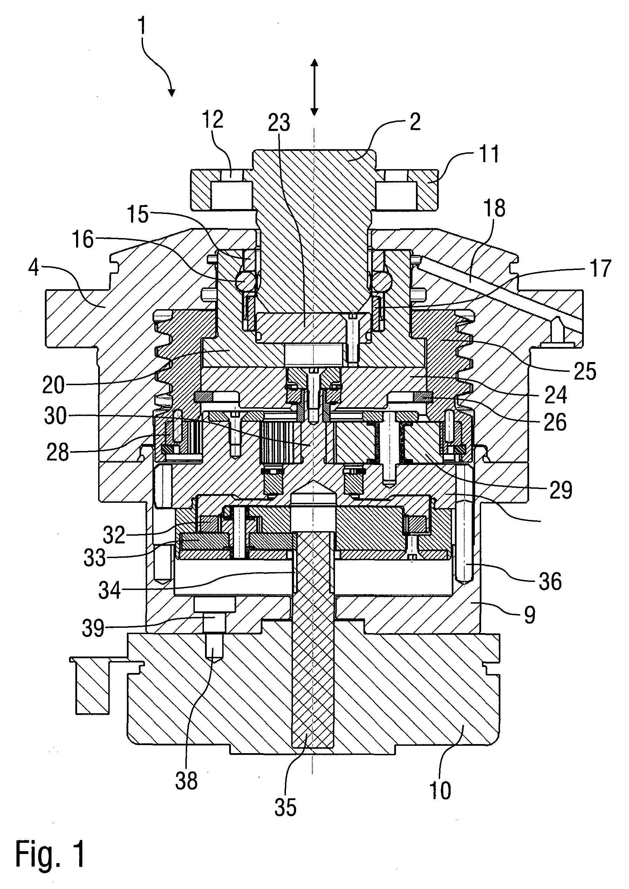

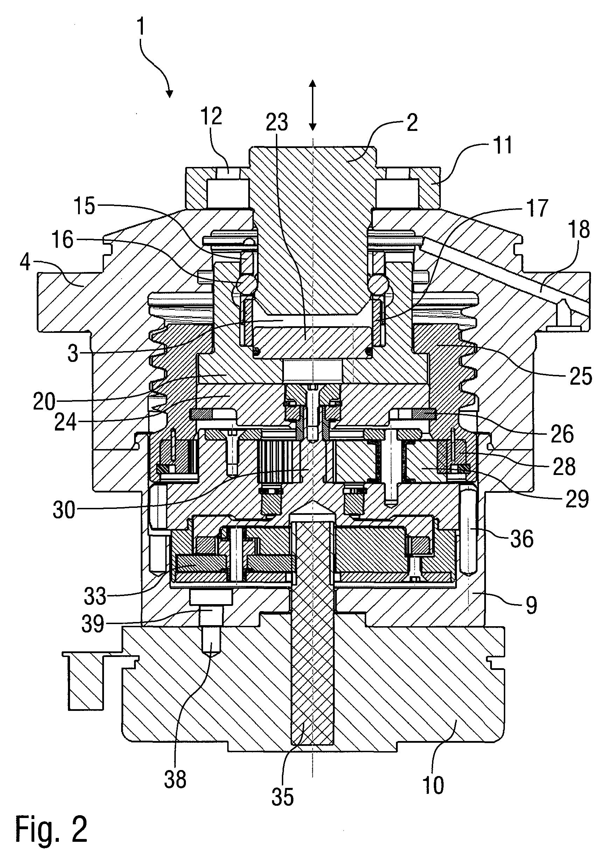

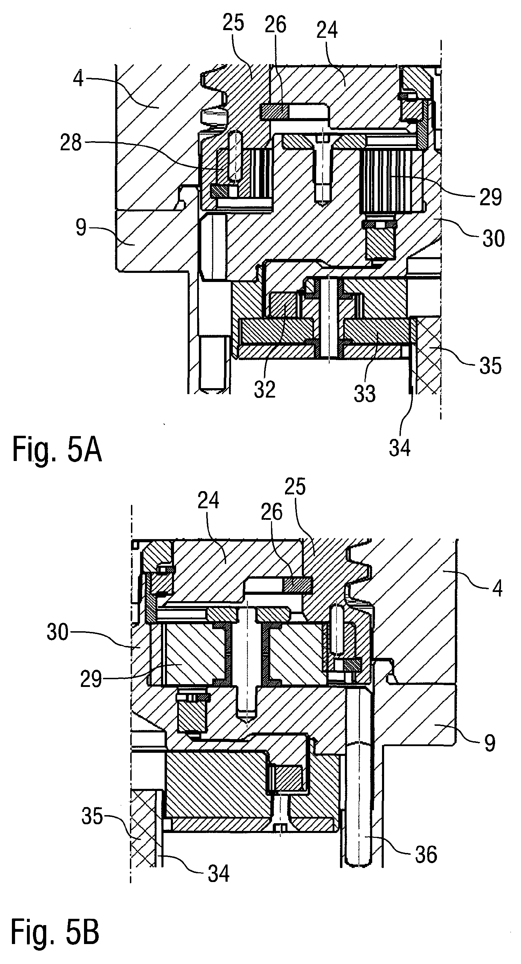

Die Figuren 1-6 zeigen verschiedene Ansichten eines erfindungsgemäßen Nullpunktspannsystems 1 zum Spannen eines Einzugsnippels 2 in einer Aufnahmebohrung 3 (vgl. Fig. 2) des Nullpunktspannsystems 1, wobei der Einzugsnippel 2 beispielsweise an einer Werkstückpalette befestigt werden kann, wie noch detailliert beschrieben wird.

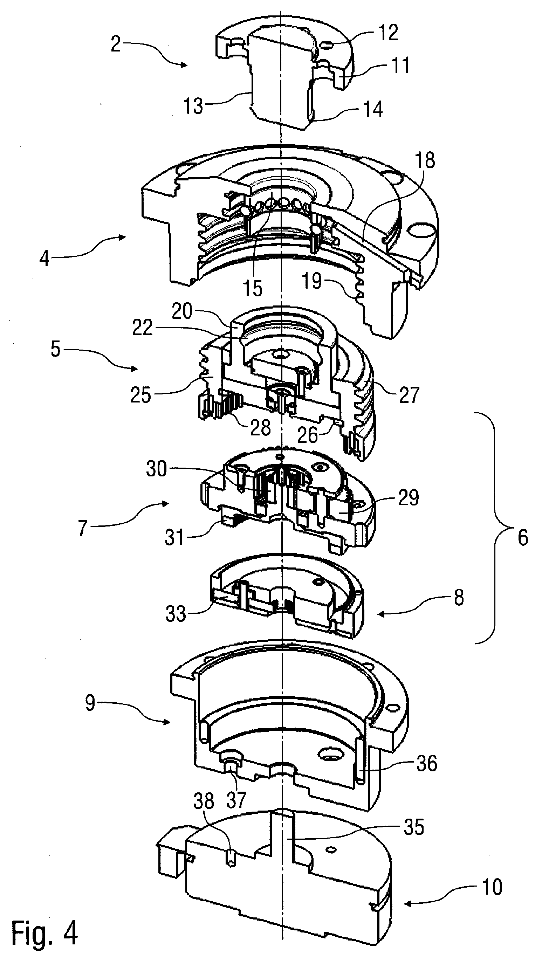

Das erfindungsgemäße Nullpunktspannsystem 1 weist verschiedene Komponenten auf, die in der Explosionsdarstellung in Figur 4 dargestellt sind und nachfolgend kurz beschrieben werden. So besteht das Nullpunktspannsystem 1 im Wesentlichen aus einem oberen Gehäuseteil 4, einem Spannmodul 5, einem Planetengetriebe 6 mit einer oberen Planetenstufe 7 und einer unteren Planetenstufe 8, einem unteren Gehäuseteil 9 und einem Elektromotor 10, wobei die einzelnen Komponenten nachfolgend detailliert beschrieben werden.

Der Einzugsnippel 2 kann entlang einer Einzugsachse in die Aufnahmebohrung 3 in dem oberen Gehäuseteil 4 eingeführt werden, wobei die Einzugsachse in den Figuren 1-3 durch einen Doppelpfeil dargestellt ist. Zur Befestigung an einer Werkstückpalette oder einem anderen Bauteil weist der Einzugsnippel 2 einen ringförmig umlaufenden Kragen 11 auf, wobei in dem Kragen 11 Montagebohrungen 12 angebracht sind, die eine Verschraubung des Einzugsnippels 2 an einem Bauteil ermöglichen. Darüber hinaus weist der Einzugsnippel 2 in seiner äußeren Umfangsfläche eine Ringnut 13 und an seinem distalen Ende einen Vorsprung 14 auf, um ein Einspannen des Einzugsnippels 2 in der Aufnahmebohrung 3 zu ermöglichen, wie noch detailliert beschrieben wird.

Das obere Gehäuseteil 4 enthält einen ringförmigen Kugelkäfig 15, der die Aufnahmebohrung 3 ringförmig umgibt und mehrere Spannkugeln 16 radial verschiebbar führt, wobei die Spannkugeln 16 eine Arretierung und ein axiales Festspannen des Einzugsnippels 2 in der Aufnahmebohrung 3 ermöglichen, wie noch detailliert beschrieben wird. Darüber hinaus enthält das obere Gehäuseteil 4 eine Feder 17, die den Kugelkäfig 15 mit den darin befindlichen Spannkugeln axial nach oben drückt, d.h. in Richtung der Mündungsöffnung der Aufnahmebohrung 3. Dadurch ermöglicht die Feder 17 eine Zwischenstellung des Nullpunktspannsystems, in der der Einzugsnippel 2 zwar in die Aufnahmebohrung 3 eingeführt, aber nicht wieder aus der Aufnahmebohrung 3 herausgezogen werden kann, wie noch detailliert beschrieben wird.

Darüber hinaus weist das obere Gehäuseteil 4 eine Bohrung 18 auf, über die Ausblasluft zugeführt werden kann, um zu verhindern, dass Schmutz in die Aufnahmebohrung 3 eindringt, was an sich aus dem Stand der Technik bekannt ist.

Weiterhin umfasst das obere Gehäuseteil 4 an seiner inneren Mantelfläche ein schneckenförmiges Innengewinde 19, wobei die Funktion des schneckenförmigen Innengewindes 19 noch detailliert beschrieben wird.

Das Spannmodul 5 besteht im Wesentlichen aus einem Spannelement 20, das die Aufnahmebohrung 3 ringförmig umgibt und an seiner inneren Mantelfläche eine obere Ringnut 21 und eine untere Ringnut 22 aufweist, wobei die Funktion der beiden Ringnuten 21, 22 noch detailliert beschrieben wird.

Darüber hinaus umfasst das Spannmodul 5 ein Bodenteil 23, das mit dem Boden des Spannelements 20 verschraubt ist und den Boden der Aufnahmebohrung 3 bildet.

Ferner weist das Spannmodul 5 ein Klemmteil 24 auf sowie ein drehbares Gewindebauteil 25, wobei das Klemmteil 24 in dem drehbaren Gewindebauteil 25 durch einen Spannring 26 axial fixiert ist. Das Klemmteil 24 fixiert wiederum das Spannelement 20 in axialer Richtung in dem drehbaren Gewindebauteil 25. Das drehbare Gewindebauteil 25 trägt an seiner äußeren Mantelfläche ein Außengewinde 27, das in das Innengewinde 19 in dem oberen Gehäuseteil 4 eingreift. Eine relative Drehbewegung zwischen dem drehbaren Gewindebauteil 25 und dem oberen Gehäuseteil 4 führt also zu einer entsprechenden Axialbewegung des drehbaren Gewindebauteils 25 und damit auch des Spannelements 20 in der Einzugsachse. Das Gehäuseteil 4 und das Gewindebauteil 25 bilden also zusammen ein Schraubgetriebe, das die Drehbewegung des Elektromotors 10 in die Linearbewegung des Spannelements 20 umwandelt.

Das drehbare Gewindebauteil 25 wird hierbei von der oberen Planetenstufe 7 des Planetengetriebes 6 angetrieben. Hierzu bildet das drehbare Gewindebauteil 25 an seinem unteren Ende innen ein Hohlrad mit einer Hohlradverzahnung 28, in die mehrere Planetenräder 29 der oberen Planetenstufe 7 eingreifen.

Darüber hinaus weist die obere Planetenstufe 7 des Planetengetriebes 6 ein mittig angeordnetes Sonnenrad 30 auf, das in die Planetenräder 29 eingreift.

Das Sonnenrad 30 bildet wiederum an seiner Unterseite innen ein Hohlrad mit einer Hohlradverzahnung 31, in die mehrere Planetenräder 32 der unteren Planetenstufe 8 eingreifen. Die Planetenräder 32 der unteren Planetenstufe 8 sitzen hierbei auf einer gemeinsamen Achse mit weiteren Planetenrädern 33, die wiederum in eine Stirnradverzahnung 34 einer Abtriebswelle 35 des Elektromotors 10 eingreifen.

Weiterhin ist zu erwähnen, dass die beiden Planetenstufen 7, 8 des Planetengetriebes in dem unteren Gehäuseteil durch Stifte 36 verdrehsicher fixiert sind.

Weiterhin ist aus den Zeichnungen ersichtlich, dass das untere Gehäuseteil 9 topfförmig ausgebildet ist und in seiner Bodenfläche eine Montagebohrung 37 aufweist, die im montierten Zustand fluchtend über einer entsprechenden Montagebohrung 38 in dem Elektromotor 10 liegt. Im montierten Zustand ist in die beiden Montagebohrungen 37, 38 eine Schraube 39 eingesetzt, wodurch das untere Gehäuseteil 9 fest mit dem Elektromotor 10 verschraubt wird.

Im Folgenden wird nun die Betriebsweise des vorstehend beschriebenen Nullpunktspannsystems 1 beschrieben.

So erzeugt der Elektromotor 10 mit seiner Abtriebswelle 35 eine Drehbewegung, die über die beiden Planetenstufen 7, 8 des Planetengetriebes 6 mit einem Übersetzungsverhältnis von ca. 1:60 auf das drehbare Gewindebauteil 25 übertragen wird.

Die relative Drehbewegung zwischen dem drehbaren Gewindebauteil 25 und dem nicht drehbaren oberen Gehäuseteil 4 führt zu einer entsprechenden Axialbewegung des drehbaren Gewindebauteils 25 entlang der Einzugsachse, wobei diese Axialbewegung auf das Spannelement 20 übertragen wird.

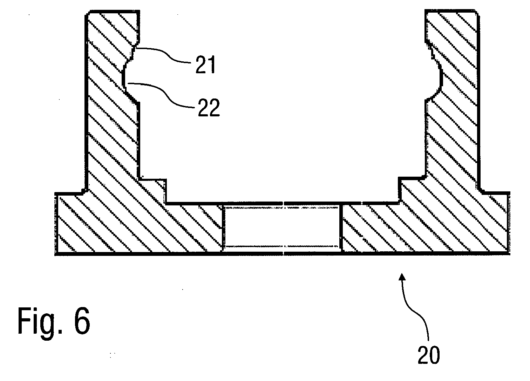

In der in Figur 1 dargestellten Freigabestellung des Spannelements 20 schlägt das Spannelement 20 mit seiner oberen Stirnfläche an der Unterseite des Mündungsrands der Aufnahmebohrung 3 an dem oberen Gehäuseteil 4 an. Weiterhin wird der Kugelkäfig 15 dann von der Feder 17 nach oben gedrückt, so dass der Kugelkäfig 15 ebenfalls mit seiner Oberseite an der Unterseite des oberen Gehäuseteils 4 anliegt. Die untere Ringnut 22 in dem Spannelement 20 (vgl. Fig. 6) befindet sich dann seitlich neben den Spannkugeln 16, so dass die Spannkugeln 16 radial nach außen in die untere Ringnut 22 ausweichen können. Dies hat zur Folge, dass der Einzugsnippel 2 in die Aufnahmebohrung 3 eingeführt und aus der Aufnahmebohrung 3 herausgezogen werden kann.

Ferner ist das Spannelement 20 in einer Ebene senkrecht zur Einzugsachse in dem Gewindebauteil 25 schwimmend gelagert, so dass das Spannelement 20 eine geringe Bewegung quer zur Einzugsachse ausführen kann. Hierfür ist ein kleiner Spalt zwischen der unteren Mantelfläche des Spannelements 20 und der umgebenden Wandfläche des Gewindebauteils 25 vorgesehen. Die schwimmende Lagerung des Spannelements 20 derart, dass es quer zur Einzugsachse beweglich ist, hat den Vorteil, dass das Spannelement 20 den Einzugsnippel 2 auch dann zuverlässig greifen und herunterziehen kann, wenn dieser z. B. 5 mm von der Einzugsachse bzw. der Mitte versetzt einfährt. Damit kann sich das Spannelement 20 und damit die gesamte Einzugsmechanik an eine verschobene Stellung des Einzugsnippels 2 anpassen.

In der in Figur 2 dargestellten Einzugsstellung ist das Spannelement 20 dagegen ganz nach unten gezogen, so dass das Spannelement 20 mit seiner inneren Mantelfläche die Spannkugeln 16 radial nach innen drückt und dadurch den Einzugsnippel 2 in der Aufnahmebohrung 3 festspannt. Hierbei ist zu erwähnen, dass die Axialbewegung des Spannelements 20 von der in Figur 1 dargestellten Freigabestellung in die in Figur 2 dargestellte Einzugsstellung durch eine Drehbewegung des Elektromotors 10 bewirkt wird, wobei die Drehbewegung des Elektromotors 10 von dem Planetengetriebe 6 in eine entsprechende relative Drehbewegung zwischen dem drehbaren Gewindebauteil 25 und dem nicht drehbaren oberen Gehäuseteil 4 umgesetzt wird. Diese relative Drehbewegung zwischen dem drehbaren Gewindebauteil 25 und dem nicht drehbaren oberen Gehäuseteil 4 führt dann zu einer entsprechenden Axialbewegung des drehbaren Gewindebauteils 25 und damit auch zu einer entsprechenden Axialbewegung des Spannelements 20.

Weiterhin ist hierbei zu erwähnen, dass das Planetengetriebe 6 in dem Nullpunktspannsystem 1 verschiebbar gelagert und mit dem Spannelement 20 verbunden ist, so dass eine axiale Verschiebung des Spannelements 20 entlang der Einzugsachse auch zu einer entsprechenden axialen Verschiebung des Planetengetriebes 6 führt.

Wichtig ist hierbei, dass die untere Planetenstufe 8 unabhängig von der axialen Verschiebung des Planetengetriebes 6 innerhalb des Nullpunktspannsystems 1 stets im Eingriff steht mit der Abtriebswelle 35 des Elektromotors 10. Dies wird dadurch erreicht, dass die Stirnradverzahnung 34 der Abtriebswelle 35 eine Verzahnungslänge entlang der Einzugsachse aufweist, die größer ist als das axiale Spiel des Planetengetriebes 6 innerhalb des Nullpunktspannsystems 1. Die unteren Planetenräder 33 können also mit ihrer Verzahnung entlang der Stirnradverzahnung 34 der Abtriebswelle 35 des Elektromotors 10 verschoben werden und befinden sich dabei stets im Eingriff.

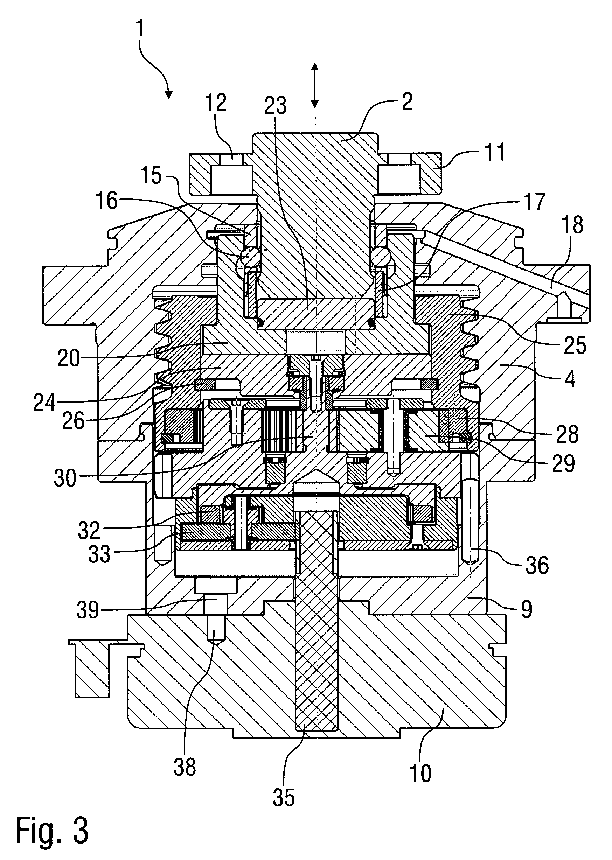

Figur 3 zeigt eine Zwischenstellung des erfindungsgemäßen Nullpunktspannsystems, in der der Kugelkäfig 15 von der Feder 17 ganz nach oben bis zum Anschlag gedrückt ist, während das Spannelement 20 leicht nach unten gezogen ist. Die Spannkugeln 16 ruhen dann in der oberen Ringnut 21 in dem Spannelement 20. Falls nun der Einzugsnippel 2 in die Aufnahmebohrung 3 eingeführt wird, so drückt der Vorsprung 14 des Einzugsnippels 2 gegen die Spannkugeln 16 und schiebt dadurch den Kugelkäfig 15 entgegen der Kraft der Feder 17 nach unten, bis die Spannkugeln 16 radial nach außen in die untere Ringnut 22 ausweichen können, wodurch die Aufnahmebohrung 3 zum Einführen des Einzugsnippels 2 freigegeben wird. Anschließend drückt die Feder 17 den Kugelkäfig 15 mit den Spannkugeln 16 wieder nach oben bis zum Anschlag. Ein Herausziehen des Einzugsnippels 2 aus der Aufnahmebohrung 3 ist dann nicht mehr möglich, da die Spannkugeln 16 dann wieder von der oberen Ringnut 21 aufgenommen werden, die eine geringere Nuttiefe aufweist und deshalb ein radiales Ausweichen der Spannkugeln 16 deshalb nur beschränkt ermöglicht. In der in Figur 3 dargestellten Zwischenstellung kann der Einzugsnippel 2 also zwar in die Aufnahmebohrung 3 eingeführt, aber nicht wieder aus der Aufnahmebohrung 3 herausgezogen werden.

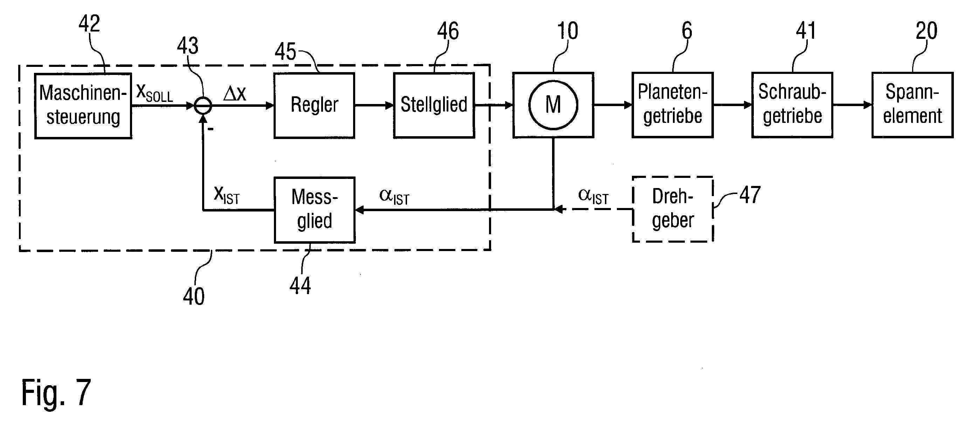

Figur 7 zeigt ein Ausführungsbeispiel des erfindungsgemäßen Nullpunktspannsystems mit einer Steuereinheit 40 zur Ansteuerung des Elektromotors 10, der über das Planetengetriebe 6 ein Schraubgetriebe 41 antreibt, das aus dem Außengewinde 27 und dem Innengewinde 19 besteht, wie bereits vorstehend beschrieben wurde. Die Steuereinheit 40 erhält von einer Maschinensteuerung 42 einen Soll-Wert X_{Soll} für die axiale Stellung des Spannelements 20. Dieser Soll-Wert X_{Soll} wird von der Maschinensteuerung 42 an einen Subtrahierer 43 weitergeleitet, der von einem Messglied 44 einen entsprechenden Ist-Wert X_{Ist} der axialen Stellung des Spannelements 20 erhält. Der Subtrahierer 43 bildet daraus eine Regelabweichung Δx und leitet diese Regelabweichung an einen Regler 45 weiter. Der Regler 45 steuert dann ein Stellglied 46 entsprechend an, wobei das Stellglied 46 den Elektromotor 10 entsprechend ansteuert, um die gewünschte axiale Stellung entsprechend dem Soll-Wert X_{Soll} einzustellen. Das Messglied 44 erfasst hierbei von dem Elektromotor 10 einen Ist-Wert α_{Ist} des Drehwinkels der Abtriebswelle 35 des Elektromotors 10. Alternativ kann das Messglied 44 diesen Ist-Wert α_{Ist} auch über einen separaten Drehgeber 47 erhalten.

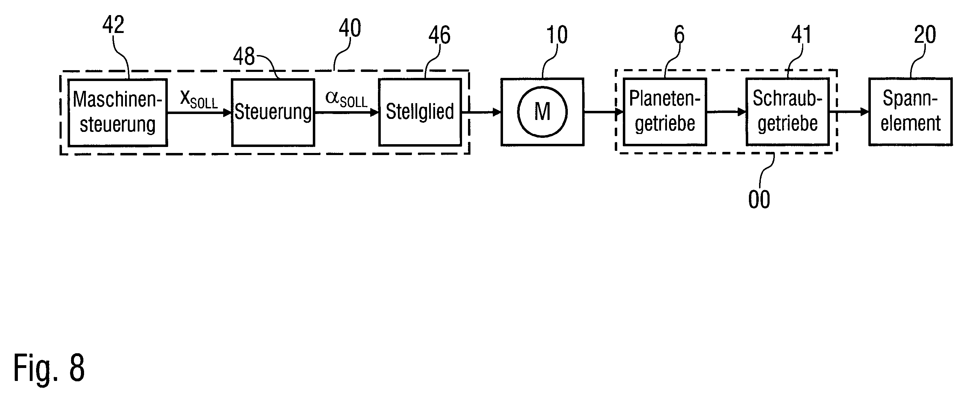

Das Ausführungsbeispiel gemäß Figur 8 stimmt weitgehend mit dem vorstehend beschriebenen und in Figur 7 dargestellten Ausführungsbeispiel überein, so dass zur Vermeidung von Wiederholungen auf die vorstehende Beschreibung verwiesen wird. Eine Besonderheit dieses Ausführungsbeispiels besteht darin, dass anstelle einer Regelung mit einer Rückkopplung eine Steuerung ohne eine Rückkopplung vorgesehen ist.

Anstelle des Reglers 45 ist deshalb eine entsprechende Steuerung 48 vorgesehen.

### Bezugszeichenliste:

- 1: Nullpunktspannsystem
- 2: Einzugsnippel
- 3: Aufnahmebohrung
- 4: Oberes Gehäuseteil
- 5: Spannmodul
- 6: Planetengetriebe
- 7: Obere Planetenstufe des Planetengetriebes
- 8: Untere Planetenstufe des Planetengetriebes
- 9: Unteres Gehäuseteil
- 10: Elektromotor
- 11: Kragen des Einzugsnippels
- 12: Montagebohrung im Kragen
- 13: Ringnut im Einzugsnippel
- 14: Vorsprung im Einzugsnippel
- 15: Kugelkäfig
- 16: Spannkugeln
- 17: Feder
- 18: Bohrung für Ausblasluft
- 19: Innengewinde des oberen Gehäuseteils
- 20: Spannelement
- 21: Obere Ringnut im Spannelement
- 22: Untere Ringnut im Spannelement
- 23: Bodenteil der Aufnahmebohrung
- 24: Klemmteil zum Einklemmen des Spannelements in dem drehbaren Gewindebauteil
- 25: Drehbares Gewindebauteil
- 26: Spannring zur Fixierung des Klemmteils
- 27: Außengewinde des drehbaren Gewindebauteils
- 28: Hohlradverzahnung der oberen Platenstufe
- 29: Planetenrad der oberen Planetenstufe
- 30: Sonnenrad der oberen Planetenstufe
- 31: Hohlradverzahnung
- 32: Planetenräder
- 33: Planetenräder
- 34: Stirnradverzahnung der Abtriebswelle des Elektromotors
- 35: Abtriebswelle des Elektromotors
- 36: Stifte zur Verdrehsicherung des Planetengetriebes
- 37: Montagebohrung in der Bodenfläche des unteren Gehäuseteils
- 38: Montagebohrung in dem Elektromotor
- 39: Schraube
- 40: Steuereinheit
- 41: Schraubgetriebe
- 42: Maschinensteuerung
- 43: Subtrahierer
- 44: Messglied
- 45: Regler
- 46: Stellglied
- 47: Drehgeber
- 48: Steuerung

## Patentansprüche

1. Nullpunktspannsystem, mit
a) einer Aufnahmebohrung (3) zur Aufnahme eines Einzugsnippels (2) entlang einer Einzugsachse, wobei der Einzugsnippel (2) an einem zu spannenden Gegenstand angebracht werden kann,
b) einem Spannelement (20) zum Festspannen des Einzugsnippels (2) in der Aufnahmebohrung (3), wobei das Spannelement (20) entlang der Einzugsachse verschiebbar ist,
c) einem auf das Spannelement (20) wirkenden Antrieb (10) zum Verschieben des Spannelements (20) entlang der Einzugsachse,
d) wobei der Antrieb (10) für das Spannelement (20) ein Rotationsantrieb (10) ist,
**dadurch gekennzeichnet,**
e) dass der Rotationsantrieb (10) durch ein zweistufiges Getriebe (6, 19, 27; 41) mit dem Spannelement (20) verbunden ist umfassend
f) ein erstes Getriebe (19, 27; 41), um eine Drehbewegung des Rotationsantriebs (10) in eine Linearbewegung des Spannelements (20) entlang der Einzugsachse umzuwandeln, und
g) ein zweites Getriebe (6), das zwischen dem Rotationsantrieb (10) und dem ersten Getriebe (19, 27; 41) angeordnet ist, wobei das zweite Getriebe (6) mit dem verschiebbaren Spannelement (20) mechanisch verbunden ist und sich zusammen mit dem Spannelement (20) axial entlang der Einzugsachse bewegt.

2. Spannsystem (1) nach Anspruch 1,
**dadurch gekennzeichnet,**
b) dass das erste Getriebe (19, 27; 41) ein Schraubgetriebe (19, 27; 41) ist, so dass eine Zugbelastung oder eine Druckbelastung des Schraubgetriebes (19, 27; 41) entlang der Einzugsachse nicht zu einer Drehbewegung des Schraubgetriebes (19, 27; 41) führt.

3. Spannsystem (1) nach Anspruch 2, **dadurch gekennzeichnet, dass** das Schraubgetriebe (19, 27; 41) folgende Bauteile aufweist:
a) ein entlang der Einzugsachse axial feststehendes erstes Gewindebauteil (4), insbesondere in Form eines Gehäusebauteils,
b) ein entlang der Einzugsachse axial verschiebbares zweites Gewindebauteil (25), das mit dem Spannelement (20) verbunden ist,
c) wobei eines der beiden Gewindebauteile (4, 25) um die Einzugsachse drehbar ist und von dem Rotationsantrieb (10) angetrieben wird, und
d) eine Schraubgewindeverbindung (19, 27) zwischen den beiden Gewindebauteilen (4, 25) mit einem schraubenförmigen Außengewinde (27) und einem schraubenförmigen Innengewinde (19), so dass eine relative Drehbewegung der beiden Gewindebauteile (4, 25) zu der Linearbewegung des verschiebbaren zweiten Gewindebauteils (25) und damit auch des Spannelements (20) entlang der Einzugsachse führt.

4. Spannsystem (1) nach Anspruch 3,
**dadurch gekennzeichnet,**
a) **dass** das entlang der Einzugsachse verschiebbare zweite Gewindebauteil (25) um die Einzugsachse drehbar ist, während das entlang der Einzugsachse axial feststehende erste Gewindebauteil (4) nicht drehbar ist, oder
b) **dass** das entlang der Einzugsachse axial verschiebbare zweite Gewindebauteil nicht drehbar ist, während das axial feststehende erste Gewindebauteil drehbar ist.

5. Spannsystem (1) nach Anspruch 3 oder 4,
**dadurch gekennzeichnet,**
a) **dass** das entlang der Einzugsachse feststehende erste Gewindebauteil (4) das Innengewinde (19) aufweist, während das entlang der Einzugsachse verschiebbare zweite Gewindebauteil (25) das Außengewinde (27) aufweist, oder
b) **dass** das entlang der Einzugsachse feststehende erste Gewindebauteil die Außenverzahnung aufweist, während das entlang der Einzugsachse verschiebbare zweite Gewindebauteil die Innenverzahnung aufweist.

6. Spannsystem (1) nach einem der Ansprüche 2 bis 5,
**dadurch gekennzeichnet,**
a) **dass** das zweite Getriebe (6, 19, 27; 41) mindestens ein Planetengetriebe (6) aufweist, das zwischen dem Rotationsantrieb (10) und dem Schraubgetriebe (19, 27; 41) angeordnet ist, und
b) **dass** das Planetengetriebe (6) die Drehbewegung des Rotationsantriebs (10) mit einer Übersetzung in die Drehbewegung des Schraubgetriebes (19, 27; 41) umsetzt, und
c) **dass** das Planetengetriebe (6) mindestens zwei Planetenstufen (7, 8) aufweist, und
d) **dass** das Spannsystem (1) ein Gehäuse (4, 9) aufweist, das auch das Planetengetriebe (6) oder zumindest eine Planetenstufe (7, 8) des Planetengetriebes (6) einhaust, und
e) **dass** das Planetengetriebe (6) oder zumindest eine Planetenstufe (7, 8) des Planetengetriebes (6) mit dem verschiebbaren Spannelement (20) mechanisch verbunden ist und sich zusammen mit dem Spannelement (20) axial entlang der Einzugsachse bewegt.

7. Spannsystem (1) nach Anspruch 6,
**dadurch gekennzeichnet,**
a) **dass** die Abtriebswelle (35) des Rotationsantriebs (10) eine Stirnradverzahnung (34) mit einer bestimmten axialen Verzahnungslänge entlang der Einzugsachse aufweist,
b) **dass** das Planetengetriebe (6) mit einem bestimmten axialen Spiel entlang der Einzugsachse verschiebbar ist, und
c) **dass** die Verzahnungslänge der Abtriebswelle (35) größer ist als das axiale Spiel des Planetengetriebes (6), so dass die Abtriebswelle (35) in jeder axialen Stellung des entlang der Einzugsachse verschiebbaren Planetengetriebes (6) mit der Eingangsverzahnung des Planetengetriebes (6) im Eingriff steht.

8. Spannsystem (1) nach einem der vorhergehenden Ansprüche, **dadurch gekennzeichnet,**
a) **dass** das Spannelement (20) senkrecht zur Einzugsachse schwimmend gelagert ist, insbesondere in dem verschiebbaren zweiten Gewindebauteil (25), und
b) **dass** die Linearbewegung des Spannelements (20) entlang der Einzugsachse sowohl in einer Einzugsrichtung als auch in einer entgegen gesetzten Aushubrichtung begrenzt ist.

9. Spannsystem (1) nach einem der vorhergehenden Ansprüche, **dadurch gekennzeichnet,**
a) **dass** der Rotationsantrieb (10) einen Elektromotor aufweist, und/oder
b) **dass** das Spannsystem (1) hydraulikfrei und/oder pneumatikfrei ist, und/oder
c) **dass** der Rotationsantrieb (10) eine drehbare Abtriebswelle (35) aufweist, die mit der Einzugsachse der Aufnahmebohrung (3) koaxial fluchtet.

10. Spannsystem (1) nach einem der vorhergehenden Ansprüche, **gekennzeichnet durch**
a) einen Kugelkäfig (15), der die Aufnahmebohrung (3) ringförmig umgibt, und
b) mehrere Spannkugeln (16), die von dem Kugelkäfig (15) radial verschiebbar geführt werden,
b1) wobei die Spannkugeln (16) in einer radial innen liegenden Stellung den Einzugsnippel (2) in der Aufnahmebohrung (3) arretieren,
b2) wohingegen die Spannkugeln (16) in einer radial außen liegenden Stellung die Aufnahmebohrung (3) zum Einführen oder Herausziehen des Einzugsnippels (2) freigeben,
c) wobei das Spannelement (20) den Kugelkäfig (15) ringförmig umgibt und in seiner inneren Mantelfläche eine Ringnut (22) aufweist,
c1) wobei die Ringnut (22) in einer Freigabestellung des Spannelements (20) den Spannkugeln (16) eine radiale Ausweichbewegung nach außen ermöglicht,
c2) wohingegen die innere Mantelfläche des Spannelements (20) die Spannkugeln (16) in einer Spannstellung des Spannelements (20) radial nach innen drückt, um den Einzugsnippel (2) zu spannen, und/oder
d) eine Feder (17), die den entlang der Einzugsachse verschiebbaren Kugelkäfig (15) mit den Spannkugeln (16) in Richtung der Mündungsöffnung der Aufnahmebohrung (3) drückt.

11. Spannsystem (1) nach einem der vorhergehenden Ansprüche, **dadurch gekennzeichnet,**
a) **dass** das Spannelement (20) zwischen einer Freigabestellung, einer Einzugstellung und einer Zwischenstellung verschiebbar ist,
b) **dass** der Einzugsnippel (2) in der Freigabestellung des Spannelements (20) in die Aufnahmebohrung (3) eingeführt und aus der Aufnahmebohrung (3) heraus gezogen werden kann,
c) **dass** der Einzugsnippel (2) in der Einzugsstellung des Spannelements (20) in der Aufnahmebohrung (3) arretiert und gespannt wird, und
d) **dass** der Einzugsnippel (2) in der Zwischenstellung des Spannelements (20) in die Aufnahmebohrung (3) eingeführt, aber nicht mehr aus der Aufnahmebohrung (3) heraus gezogen werden kann.

12. Spannsystem (1) nach einem der vorhergehenden Ansprüche, **dadurch gekennzeichnet,**
a) **dass** das ringförmige Spannelement (20) in seiner inneren Mantelfläche eine obere Ringnut (21) und eine untere Ringnut (22) aufweist,
b) **dass** die obere Ringnut (21) eine kleinere Nuttiefe aufweist als die untere Ringnut (22), und
c) **dass** die beiden Ringnuten (21, 22) entlang der Einzugsachse ineinander übergehen.

13. Spannsystem (1) nach Anspruch 11 und Anspruch 12, **dadurch gekennzeichnet,**
a) **dass** die Spannkugeln (16) in der Freigabestellung des Spannelements (20) von der unteren Ringnut (22) aufgenommen werden, wobei die Nuttiefe der unteren Ringnut (22) so groß ist, dass die Spannkugeln (16) in der Freigabestellung des Spannelements (20) radial so weit nach außen ausweichen können, dass der Einzugsnippel (2) in die Aufnahmebohrung (3) hinein geschoben und aus der Aufnahmebohrung (3) heraus gezogen werden kann,
b) **dass** die Spannkugeln (16) in der Zwischenstellung des Spannelements (20) von der oberen Ringnut (21) aufgenommen werden, wobei die Nuttiefe der oberen Ringnut (21) so klein ist, dass die von der oberen Ringnut (21) aufgenommenen Spannkugeln (16) in der Zwischenstellung des Spannelements (20) ein Herausziehen des Einzugsnippels (2) aus der Aufnahmebohrung (3) verhindern,
c) **dass** die Spannkugeln (16) in der Zwischenstellung des Spannelements (20) von dem Einzugsnippel (2) beim Einführen in die Aufnahmebohrung (3) von der oberen Ringnut (21) in die untere Ringnut (22) geschoben werden können, wodurch in der Zwischenstellung des Spannelements (20) das Einführen des Einzugsnippels (2) ermöglicht wird.

14. Spannsystem (1) nach einem der vorhergehenden Ansprüche, **dadurch gekennzeichnet,**
a) **dass** Spannsystem (1) eine Steuereinheit (40) aufweist, welche die Drehbewegung des Rotationsantriebs (10) erfasst und aus der erfassten Drehbewegung die Linearbewegung des Spannelements (20) ermittelt, und/oder
b) **dass** die Steuereinheit (40) die Linearbewegung des Spannelements (20) stufenlos steuern und beliebige Zwischenstellungen des Spannelements (20) anfahren kann, und/oder
c) **dass** die Steuereinheit (40) eine Regelung aufweist, die als Soll-Wert (X_{SOLL}) die gewünschte axiale Stellung des Spannelements (20) entlang der Einzugsachse erhält und als Regelgröße die Drehstellung (α_{IST}) des Rotationsantriebs (10) einstellt und erfasst, oder
d) **dass** die Steuereinheit (40) als Soll-Wert (X_{SOLL}) die gewünschte axiale Stellung des Spannelements (20) entlang der Einzugsachse erhält und die Drehstellung (α_{IST}) des Rotationsantriebs (10) rückkopplungsfrei entsprechend dem Soll-Wert (X_{SOLL}) einstellt.

## Claims

1. Zero point clamping system, comprising
a) a receiving bore (3) to receive a pull-in fitting (2) along a pull-in axis, wherein the pull-in fitting (2) can be mounted on an article to be clamped,
b) a clamping element (20) for securing the pull-in fitting (2) in the receiving bore (3), wherein the clamping element (20) is movable along the pull-in axis,
c) a drive (10) acting on the clamping element (20) for displacement of the clamping element (20) along the pull-in axis,
d) wherein the drive (10) for the clamping element (20) is a rotational drive (10), **characterised in that**
e) the rotational drive (10) is connected by a two-stage transmission (6, 19, 27; 41) to the clamping element (29), comprising
f) a first gear (19, 27; 41) in order to convert a rotational movement of the rotational drive (10) into a linear movement of the clamping element (20) along the pull-in axis, and
g) a second transmission (6), which is arranged between the rotational drive (10) and the first transmission (19, 27; 41), wherein the second transmission (6) is mechanically connected to the movable clamping element (20) and moves together with the clamping element (20) axially along the pull-in axis.

2. Clamping system (1) according to claim 1,
**characterised in that**
b) the first transmission (19, 27; 41) is a worm gear (19, 27; 41), so that a tensile loading or a pressure loading of the worm gear (19, 27; 41) along the pull-in axis does not lead to a rotary movement of the worm gear (19, 27; 41).

3. Clamping system (1) according to claim 2, **characterised in that** the worm gear (19, 27; 41) includes the following components:
a) a first threaded component (4) which is axially immobile along the pull-in axis, in particular in the form of a housing component,
b) a second threaded component (25) which is axially movable along the pull-in axis and is connected to the clamping element (20),
c) wherein one of the two threaded components (4, 25) is rotatable about the pull-in axis and is driven by the rotational drive (10), and
d) a screw thread connection (19, 27) between the two threaded components (4, 25) having a helical external thread (27) and a helical internal thread (19), so that a relative rotational movement of the two threaded components (4, 25) leads to the linear movement of the movable second threaded component (25) and thus also of the clamping element (20) along the pull-in axis.

4. Clamping system (1) according to claim 3,
**characterised in that**
a) that the second threaded component (25) which is movable along the pull-in axis is rotatable about the pull-in axis, whereas the first threaded component (4) which is axially immobile along the pull-in axis is not rotatable, or
b) that the second threaded component which is axially movable along the pull-in axis is not rotatable, whereas the axially immobile first threaded component is rotatable.

5. Clamping system (1) according to claim 3 or 4,
**characterised in that**
a) that the first threaded component (4) which is immobile along the pull-in axis has the internal thread (19), whereas the second threaded component (25) which is movable along the pull-in axis has the external thread (27),
a) that the first threaded component which is immobile along the pull-in axis has the external toothing (19), whereas the second threaded component which is movable along the pull-in axis has the internal thread,

6. Clamping system (2) according to any one of claims 2 to 5,
**characterised in that**
a) the second transmission (6, 19, 27; 41) has at least one planetary gear unit (6) which is arranged between the rotational drive (10) and the worm gear (19, 27; 41), and
b) the planetary gear unit (6) converts the rotary movement of the rotational drive (10) with a step-up into the rotary movement of the worm gear (19, 27; 41), and
c) the planetary gear transmission (6) has at least two planetary stages (7, 8), and
d) the clamping system (1) has a housing (4, 9) which also houses the planetary gear unit (6) or at least one planetary stage (7, 8) of the planetary gear unit (6), and
g) the planetary gear unit (6) or at least one planetary stage (7, 8) of the planetary gear unit (6) which is mechanically connected to the movable clamping element (20) and moves together with the clamping element (20) axially along the pull-in axis.

7. Clamping system (1) according to claim 6,
**characterised in that**
a) the output shaft (35) of the rotational drive (10) has a spur gear toothing (34) with a specific axial toothing length along the pull-in axis,
b) the planetary gear unit (6) is movable with a specific axial play along the pull-in axis, and
c) the toothing length of the output shaft (35) is greater than the axial play of the planetary gear unit (6) so that, in any axial position of the planetary gear unit (6) which is movable along the pull-in axis, the output shaft (35) is in engagement with the input toothing of the planetary gear unit (6).

8. Clamping system (1) according to one of the preceding claims, **characterised in that**
a) the clamping element (20) is mounted floating perpendicular to the pull-in axis, in particular in the movable second threaded component (25), and
b) the linear movement of the clamping element (20) along the pull-in axis is limited both in the pull-in direction and also in an opposing lift-out direction.

9. Clamping system (1) according to one of the preceding claims, **characterised in that**
a) the rotational drive (10) has an electric motor, and/or
b) the clamping system (1) is non-hydraulic and/or non-pneumatic, and/or
c) that the rotational drive (10) has a rotatable output shaft (35) which is aligned coaxially with the pull-in axis of the receiving bore (3).

10. Clamping system (1) according to one of the preceding claims, **characterised by**
a) a ball cage (15) which surrounds the receiving bore (3) in an annular manner, and
b) a plurality of clamping balls (16) which are radially movably guided by the ball cage (15),
b1) wherein in a radially inner position the clamping balls (16) lock the pull-in fitting (2) in the receiving bore (3),
b2) whereas in a radially outer position the clamping balls (16) free the receiving bore (3) for the introduction or withdrawal of the pull-in fitting (2),
c) wherein the clamping element (20) surrounds the ball cage (15) in an annular manner surrounds and has an annular groove (22) in its internal shell surface,
c1) wherein in a release position of the clamping element (20) the annular groove (22) enables a radial diverting movement of the clamping ball (16) outwards,
c2) whereas in a clamping position of the clamping element (20) the internal shell surface of the clamping element (20) presses the clamping balls (16) radially inwards, in order to clamp the pull-in fitting (2), and/or
d) a spring (17) which presses the ball cage (15), which is movable along the pull-in axis, with the clamping balls (16) in the direction of the mouth opening of the receiving bore (3).

11. Clamping system (1) according to one of the preceding claims, **characterised in that**
a) the clamping element (20) is movable between a release position, a pull-in position and an intermediate position,
b) in the release position of the clamping element (20) the pull-in fitting (2) can be introduced into the receiving bore (3) and can be withdrawn from the receiving bore (3),
c) in the pull-in position of the clamping element (20) the pull-in fitting (2) can be locked and clamped in the receiving bore (3),
d) in the intermediate position of the clamping element (20) the pull-in fitting (2) can be introduced into the receiving bore (3) but can no longer can be withdrawn from the receiving bore (3).

12. Clamping system (1) according to one of the preceding claims, **characterised in that**
a) the annular clamping element (20) has an upper annular groove (21) and a lower annular groove (22) in its internal shell surface,
b) the upper annular groove (21) has a smaller groove depth than the lower annular groove (22), and
c) the two annular grooves (21, 22) merge into one another along the pull-in axis.

13. Clamping system (1) according to claim 11 and claim 12,
**characterised in that**
a) in the release position of the clamping element (20) the clamping balls are received by the lower annular groove (22), wherein the groove depth of the lower annular groove (22) is so great that in the release position of the clamping element (20) the clamping balls (16) can be diverted radially outwards so far that the pull-in fitting (2) can be pushed into the receiving bore (3) and can be withdrawn from the receiving bore (3),
b) in the intermediate position of the clamping element (20) the clamping balls (16) are received by the upper annular groove (21), wherein the depth of the upper annular groove (21) is so small that in the intermediate position of the clamping element (20) the clamping balls (16) received by the upper annular groove (21) prevent withdrawal of the pull-in fitting (2) from the receiving bore (3),
c) in the intermediate position of the clamping element (20) the clamping balls (16) can be pushed from the upper annular groove (21) into the lower annular groove (22) by the pull-in fitting (2) during introduction into the receiving bore (3), thereby enabling the introduction of the pull-in fittings in the intermediate position of the clamping element (20).

14. Clamping system (1) according to one of the preceding claims, **characterised in that**
a) the clamping system (1) includes a control unit (40) which detects the rotary movement of the rotational drive (10) and determines the linear movement of the clamping element (20) from the detected rotary, and/or
b) the control unit (40) can control the linear movement of the clamping element (20) in a continuously variable manner and can move the clamping element (20) to any intermediate positions, and/or
c) the control unit (40) has a regulating arrangement which obtains the required axial position of the clamping element (20) along the pull-in axis as a desired value (X_{SOLL}) and sets and detects the rotational position (α_{IST}) of the rotational drive (10) as a control variable, or
d) the control unit (40) obtains the required axial position of the clamping element (20) along the pull-in axis as a desired value (X_{SOLL}) and sets the rotational position (α_{IST}) of the rotational drive (10) without feedback according to the desired value (X_{SOLL}).

## Revendications

1. Système de serrage au point zéro, comprenant
a) un alésage de réception (3) servant à recevoir un raccord d'insertion (2) le long d'un axe d'insertion, dans lequel le raccord (2) peut être installé au niveau d'un objet à serrer,
b) un élément de serrage (20) servant à immobiliser le raccord d'insertion (2) dans l'alésage de réception (3), dans lequel l'élément de serrage (20) peut être déplacé par coulissement le long de l'axe d'insertion,
c) un entraînement (10) agissant sur l'élément de serrage (20) servant à déplacer par coulissement l'élément de serrage (20) le long de l'axe d'insertion, b) dans lequel l'entraînement (10) est pour l'élément de serrage (20) un entraînement en rotation (10),
**caractérisé en ce que**
e) l'entraînement en rotation (10) est relié à l'élément de serrage (20) par un engrenage (6, 19, 27 ; 41) à deux étages, comprenant
f) un premier engrenage (19, 27 ; 41) afin de convertir un déplacement de rotation d'entraînement en rotation (10) en un déplacement linéaire de l'élément de serrage (20) le long de l'axe d'insertion, et
g) un deuxième engrenage (6), qui est disposé entre l'entraînement en rotation (10) et le premier engrenage (19, 27 ; 41), dans lequel le deuxième engrenage (6) est relié mécaniquement à l'élément de serrage (20) pouvant être déplacé par coulissement et se déplace conjointement avec l'élément de serrage (20) de manière axiale le long de l'axe d'insertion.

2. Système de serrage (1) selon la revendication 1,
**caractérisé en ce que**
b) le premier engrenage (19, 27 ; 41) est un engrenage à visser (19, 27 ; 41) si bien qu'une contrainte de traction ou une contrainte de pression de l'engrenage à visser (19, 27 ; 41) le long de l'axe d'insertion ne donne pas lieu à un déplacement de rotation de l'engrenage à visser (19, 27 ; 41).

3. Système de serrage (1) selon la revendication 2, **caractérisé en ce que** l'engrenage à visser (19, 27 ; 41) présente des composants suivants :
a) un premier composant fileté (4) immobile de manière axiale le long de l'axe d'insertion, en particulier sous la forme d'un composant de boîtier,
b) un deuxième composé fileté (25) pouvant être déplacé par un coulissement axial le long de l'axe d'insertion, lequel est relié à l'élément de serrage (20),
c) dans lequel un des deux composants filetés (4, 25) peut être tourné autour de l'axe d'insertion et est entraîné par l'entraînement en rotation (10), et
d) un système de liaison fileté à visser (19, 27) entre les deux composants filetés (4, 25) pourvu d'un filetage extérieur (27) présentant une forme de vis et d'un filetage intérieur (19) présentant une forme de vis si bien qu'un déplacement de rotation relatif des deux composants filetés (4, 25) donne lieu au déplacement linéaire du deuxième composant fileté (25) pouvant être déplacé par coulissement et, ce faisant, également de l'élément de serrage (20) le long de l'axe d'insertion.

4. Système de serrage (1) selon la revendication 3,
**caractérisé en ce que**
a) le deuxième composant fileté (25) pouvant être déplacé par coulissement le long de l'axe d'insertion peut être tourné autour de l'axe d'insertion tandis que le premier composant fileté (4) axialement immobile le long de l'axe d'insertion ne peut pas être tourné, ou
b) le deuxième composant fileté pouvant être déplacé par un coulissement axial le long de l'axe d'insertion ne peut pas être tourné, tandis que le premier composant fileté axialement immobile peut être tourné.

5. Système de serrage (1) selon la revendication 3 ou 4,
**caractérisé en ce que**
a) le premier composant fileté (4) immobile le long de l'axe d'insertion présente le filetage intérieur (19), tandis que le deuxième composant fileté (25) pouvant être déplacé par coulissement le long de l'axe d'insertion présente le filetage extérieur (27), ou
b) le premier composant fileté immobile le long de l'axe d'insertion présente la denture extérieure, tandis que le deuxième composant fileté pouvant être déplacé par coulissement le long de l'axe d'insertion présente la denture intérieure.

6. Système de serrage (1) selon l'une quelconque des revendications 2 à 5,
**caractérisé en ce que**
a) le deuxième engrenage (6, 19, 27 ; 41) présente au moins un engrenage planétaire (6), qui est disposé entre l'entraînement en rotation (10) et l'engrenage à visser (19, 27 ; 41), et
b) l'engrenage planétaire (6) convertit le déplacement de rotation de l'entraînement en rotation (10) par une multiplication en le déplacement de rotation de l'engrenage à visser (19, 27 ; 41), et
c) l'engrenage planétaire (6) présente au moins deux étages planétaires (7, 8) ; et
d) le système de serrage (1) présente un boîtier (4, 9), qui abrite également l'engrenage planétaire (6) ou au moins un étage planétaire (7, 8) de l'engrenage planétaire (6), et
e) l'engrenage planétaire (6) ou au moins un étage planétaire (7, 8) de l'engrenage planétaire (6) est relié mécaniquement à l'élément de serrage (20) pouvant être déplacé par coulissement et se déplace conjointement avec l'élément de serrage (20) de manière axiale le long de l'axe d'insertion.

7. Système de serrage (1) selon la revendication 6,
**caractérisé en ce que**
a) l'arbre de sortie (35) de l'entraînement en rotation (10) présente, le long de l'axe d'insertion, une denture de roue frontale (34) présentant une longueur de denture axiale définie,
b) l'engrenage planétaire (6) peut être déplacé par coulissement le long de l'axe d'insertion avec un jeu axial défini, et
c) la longueur de denture de l'arbre de sortie (35) est plus grande que le jeu axial de l'engrenage planétaire (6) si bien que l'arbre de sortie (35) se trouve en prise avec la denture d'entrée de l'engrenage planétaire (6) dans chaque position axiale de l'engrenage planétaire (6) pouvant être déplacé par coulissement le long de l'axe d'insertion.

8. Système de serrage (1) selon l'une quelconque des revendications précédentes, **caractérisé en ce que**
a) l'élément de serrage (20) est monté de manière flottante perpendiculairement par rapport à l'axe d'insertion, en particulier dans le deuxième composant fileté (25) pouvant être déplacé par coulissement, et
b) le déplacement linéaire de l'élément de serrage (20) le long de l'axe d'insertion est limité aussi bien dans une direction d'insertion qu'également dans une direction de sortie par relèvement opposée.

9. Système de serrage (1) selon l'une quelconque des revendications précédentes, **caractérisé en ce que**
a) l'entraînement en rotation (10) présente un moteur électrique, et/ou
b) le système de serrage (1) n'est pas hydraulique et/ou n'est pas pneumatique, et/ou
c) l'entraînement en rotation (10) présente un arbre de sortie (35) pouvant être tourné, qui se trouve au même niveau de manière coaxiale avec l'axe d'insertion de l'alésage de réception (3).

10. Système de serrage (1) selon l'une quelconque des revendications précédentes, **caractérisé par**
a) une cage à billes (15), qui entoure de manière à présenter une forme annulaire l'alésage de logement (3), et
b) plusieurs billes de serrage (16), qui sont guidées de manière à pouvoir être déplacées par un coulissement radial depuis la cage à billes (15),
b1) dans lequel les billes de serrage (16) stoppent, dans une position se trouvant à l'intérieur radialement, le raccord d'insertion (2) dans l'alésage de réception (3),
b2) alors qu'à l'inverse les billes de serrage (16) libèrent, dans une position se situant à l'extérieur radialement, l'alésage de réception (3) servant à introduire ou à retirer le raccord d'insertion (2),
c) dans lequel l'élément de serrage (20) entoure de manière à présenter une forme annulaire la cage à billes (15) et présente, dans sa surface enveloppante intérieure, une rainure annulaire (22),
c1) dans lequel la rainure annulaire (22) rend possible, dans une position de libération de l'élément de serrage (20), un déplacement de déviation radial vers l'extérieur des billes de serrage (16),
c2) alors qu'à l'inverse la surface enveloppante intérieure de l'élément de serrage (20) pousse radialement vers l'intérieur les billes de serrage (16) dans une position de serrage de l'élément de serrage (20) afin de serrer le raccord d'insertion (2), et/ou
d) un ressort (17), qui pousse la cage à billes (15) pouvant être déplacée par coulissement le long de l'axe d'insertion, comprenant les billes de serrage (16) en direction de l'ouverture d'embouchure de l'alésage de réception (3).

11. Système de serrage (1) selon l'une quelconque des revendications précédentes, **caractérisé en ce que**
a) l'élément de serrage (20) peut être déplacé par coulissement entre une position de libération, une position d'insertion et une position intermédiaire,
b) le raccord d'insertion (2) peut être introduit, dans la position de libération de l'élément de serrage (20), dans l'alésage de réception (3) et peut être retiré de l'alésage de réception (3),
c) le raccord d'insertion (2) est arrêté et serré, dans la position d'insertion de l'élément de serrage (20), dans l'alésage de réception (3), et
d) le raccord d'insertion (2) est introduit, dans la position intermédiaire de l'élément de serrage (20), dans l'alésage de réception (3), mais ne peut plus toutefois être retiré de l'alésage de réception (3).

12. Système de serrage (1) selon l'une quelconque des revendications précédentes, **caractérisé en ce que**
a) l'élément de serrage (20) de forme annulaire présente, dans sa surface enveloppante intérieure, une rainure annulaire supérieure (21) et une rainure annulaire inférieure (22),
et
b) la rainure annulaire supérieure (21) présente une profondeur de rainure plus petite que celle de la rainure annulaire intérieure (22), et
c) les deux rainures annulaires (21, 22) se confondent l'une dans l'autre le long de l'axe d'insertion.

13. Système de serrage (1) selon la revendication 11 et la revendication 12,
**caractérisé en ce que**
a) les billes de serrage (16) sont reçues dans la position de libération de l'élément de serrage (20) par la rainure annulaire inférieure (22), dans lequel la profondeur de rainure de la rainure annulaire inférieure (22) est si grande que les billes de serrage (16) peuvent, dans la position de libération de l'élément de serrage (20), dévier vers l'extérieur de manière radiale de manière si éloignée que le raccord d'insertion (2) peut être glissé à l'intérieur de l'alésage de réception (3) et peut être retiré hors de l'alésage de réception (3),
b) les billes de serrage (16) sont reçues, dans la position intermédiaire de l'élément de serrage (20), par la rainure annulaire supérieure (21), dans lequel la profondeur de rainure de la rainure annulaire supérieure (21) est si petite que les billes de serrage (16) reçues par la rainure annulaire supérieure (21) empêchent, dans la position intermédiaire de l'élément de serrage (20), un retrait du raccord d'insertion (2) hors de l'alésage de réception (3),
c) les billes de serrage (16) peuvent être glissées, dans la position intermédiaire de l'élément de serrage (20), par le raccord d'insertion (2), lors de l'introduction dans l'alésage de réception (3), depuis la rainure annulaire supérieure (21) dans la rainure annulaire inférieure (22), ce qui rend possible, dans la position intermédiaire de l'élément de serrage (20), l'introduction du raccord d'insertion (2).

14. Système de serrage (1) selon l'une quelconque des revendications précédentes, **caractérisé en ce que**
a) le système de serrage (1) présente une unité de commande (40), qui détecte le déplacement de rotation de l'entraînement en rotation (10) et qui détermine, à partir du déplacement de rotation détecté, le déplacement linéaire de l'élément de serrage (20), et/ou
b) l'unité de commande (40) peut commander de manière progressive le déplacement linéaire de l'élément de serrage (20) et peut s'approcher des positions intermédiaires quelconques de l'élément de serrage (20), et/ou
c) l'unité de commande (40) présente un système de régulation, qui reçoit, en tant que valeur théorique (X_{théorique}), la position axiale souhaitée de l'élément de serrage (20) le long de l'axe d'insertion et qui règle ou détecte, en tant que grandeur de régulation, la position de rotation (α_{réelle}) de l'entraînement en rotation (10), ou
d) l'unité de commande (40) reçoit, en tant que valeur théorique (X_{théorique}) la position axiale souhaitée de l'élément de serrage (20) le long de l'axe d'insertion et règle la position de rotation (α_{réelle}) de l'entraînement en rotation (10) sans couplage rétroactif conformément à la valeur théorique (X_{théorique}).
